# EUROPEAN PATENT APPLICATION

(11) **EP 1 720 260 A1**
(43) Date of publication of application: **08.11.2006**
(21) Application number: 05710115.6
(22) Date of filing: 10.02.2005
(51) Int. Cl.: H04B 1/06, H01Q 3/24, H04B 1/18, H04B 17/00

(54) **TRANSMITTER, RECEIVER, COMMUNICATION DEVICE, RADIO COMMUNICATION SYSTEM, DATA TRANSMITTING METHOD, DATA RECEIVING METHOD, PROGRAM, COMPUTER-READABLE RECORDING MEDIUM WHERE PROGRAM IS RECORDED**

(30) Priority: 13.02.2004 JP 2004036879
(71) Applicant: SHARP KABUSHIKI KAISHA, Osaka-shi, Osaka 545-8522 (JP)
(72) Inventor: TANAKA, Mitsunori, Chiba 272-0032 (JP)
(74) Representative: Müller, Frithjof E.
(86) International application number: PCT/JP2005/002063
(87) International publication number: WO 2005/078941

(57) **Abstract**

A worker selects at least one antenna in each of a video transmitter unit (20) and a display unit (30) with a remote controller (80). A selection signal, transmitted from the remote controller (80), feeds to light receiving means (69), (78) and passed on to microcomputers (67), (75). The microcomputers (67), (75) activate one of the antennas (26), (27) in wireless transmitting/receiving means (65) and one of the antennas (41), (42), (43) in wireless transmitting/receiving means (79), for which a selection instruction has been received.

## Description

### TECHNICAL FIELD

The present invention relates to a wireless communications system which transmits image data for display by wireless LAN or like wireless communications, especially, to a wireless communications system, transmitting device, receiving device, communications device, data transmission method, data reception method, computer program, and computer-readable storage medium containing the computer program, allowing inspection of the communications capability of a plurality of antennas.

### BACKGROUND ART

Portable wireless communications devices are being proposed recently. Examples include liquid crystal television devices and CRT television devices. These devices send and receive video signals by an SS (Spread Spectrum) wireless scheme in compliance with IEEE 802.11 or IEEE 802.11B. Apart from the wireless communications devices operating under this particular wireless scheme, those which are compatible with next generation mobile phone devices with increased data transfer rate, PHS (Personal Handy-Phone System), and Bluetooth are also being proposed.

These wireless schemes require a reception antenna. Generally, the antenna element 12 for the 2.4-GHz frequency band used in the SS wireless scheme and Bluetooth is about 3 cm long, or an equivalent of a quarter of the wavelength.

The antenna contains a pair of main antenna elements which are positioned at right angles. See Japanese Unexamined Patent Publication 2-278903/1990 (Tokukaihei 2-278903; published on November 15, 1990). Positioned perpendicular to each other, the pair of antenna elements has sufficient gain in each direction. One can therefore exploit reception performance of the elements in accordance with the polarization planes and changes in direction of radio waves radiating from a transmitting body for wireless communications.

In inspection before shipping, a transmitting device receiving image data and transmitting the data by an SS wireless scheme and a display device receiving the data and producing a display were, with all components being encased in the housings, tested for operation by transmitting predetermined images from the transmitting device and checking the condition of the image display produced on the display device.

The testing only checked whether the display device produced a good display of images. If the reception condition is bad, those parts containing the antenna parts in the housings of the transmitting device and the display device needed to be exposed for high precision inspection to identify the malfunctioning part. If the malfunctioning component is identified to some extent in a testing before shipping, only that part needs to be inspected further. These procedures save labor and time in inspection.

In addition, the testing above cannot determine whether the antennas are functioning properly. The testing only checks image display condition for a particular combination of a transmission antenna and a reception antenna. The testing does not cover all antenna combinations.

For these reasons, as far as the antennas are concerned, high precision inspection has to be done on each antenna to determine which antenna is malfunctioning (defective). It is troublesome and time consuming to identify a malfunctioning antenna.

### DISCLOSURE OF INVENTION

The present invention, conceived to address these problems, has an objective to provide a transmitting device, receiving device, communications device, wireless communications system, data transmission method, data reception method, computer program, and computer-readable storage medium containing the computer program, enabling defective antennas to be identified with ease.

Another objective of the present invention is, in view of the current situations detailed above, to provide a wireless communications system which allows inspection of communications condition of each one of anisotropically positioned antennas in inspection.

A transmitting device in accordance with the present invention, to address the problems described above, is characterized in that it includes: a plurality of data transmission antennas; reception means, for the transmitting device, receiving an external designation signal designating one of the plurality of antennas for use in data transmission; and transmission means transmitting data using the antenna designated by the designation signal.

According to the arrangement, the reception means for the transmitting device receives an external designation signal designating one of the plurality of antennas for use in data transmission. Furthermore, the transmission means transmits data using the antenna designated by the designation signal.

Therefore, the receiving-end device (receiving device) can verify the data transmitted using the designated antenna.

Therefore, if data reception in the receiving device is in good condition, the designated antenna is determined to be free from defects.

Another transmitting device in accordance with the present invention, to address the problems described above, is characterized in that it includes: a plurality of data transmission antennas; designation means, for the transmitting device, sequentially designating the plurality of antennas upon receiving a predetermined instruction; and transmission means transmitting data using the sequentially designated antennas.

According to the arrangement, when the designation means for the transmitting device receives a predetermined signal, the designation means for the transmitting device sequentially designates the plurality of antennas. Furthermore, the transmission means transmits data using the sequentially designated antennas.

Therefore, the receiving device can verify the data transmitted using the antennas.

Therefore all the antennas can be inspected for a defect.

A receiving device in accordance with the present invention, to address the problems described above, is characterized in that it includes: a plurality of data reception antennas; reception means, for the receiving device, receiving an external designation signal designating one of the plurality of antennas for use in data reception; and receiving means receiving data using the antenna designated by the designation signal.

According to the arrangement, the reception means for the receiving device receives an external designation signal designating one of the plurality of antennas for use in data reception. Furthermore, the receiving means receives data using the antenna designated by the designation signal.

Therefore, the receiving device can verify the data received using the designated antenna.

Therefore, if data reception in the receiving device is in good condition, the designated antenna is determined to be free from defects.

Another receiving device in accordance with the present invention, to address the problems described above, is characterized in that it includes: a plurality of data reception antennas; designation means, for the receiving device, sequentially designating the plurality of antennas upon receiving a predetermined instruction; and receiving means receiving data using the sequentially designated antennas.

According to the arrangement, when the designation means for the receiving device receives a predetermined signal, the designation means for the receiving device sequentially selects the plurality of antennas. Furthermore, the receiving means receives data using the sequentially designated antennas.

Therefore, the receiving device can verify the data transmitted using the antennas.

Therefore, all the antennas can be inspected for a defect.

A wireless communications system in accordance with the present invention, to address the problems described above, is characterized in that it includes one of the aforementioned transmitting devices and one of the aforementioned receiving devices.

According to the arrangement, the wireless communications system includes an aforementioned transmitting device and an aforementioned receiving device.

Therefore, at least the transmitting device and the receiving device receiving respective designation signals, which determines whether the antennas of the transmitting device and the antennas of the receiving device are operating normally.

Another wireless communications system in accordance with the present invention, to address the problems described above, includes a transmitting device and a receiving device, each including a plurality of anisotropically positioned antennas, and is characterized in that the system includes selection means allowing selections as to whether to individually activate the plurality of antennas in the transmitting device and the receiving device in an inspection step, wherein: the transmitting device includes transmission control means activating one of the plurality of antennas according to an instruction from the selection means; and the receiving device includes reception control means activating one of the plurality of antennas according to an instruction from the selection means, so that at least one antenna is activated in each of the transmitting device and the receiving device to inspect communications condition for all combinations of the plurality of antennas.

Another wireless communications system in accordance with the present invention, to address the problems described above, includes a transmitting device and a receiving device, each including a plurality of anisotropically positioned antennas, and is characterized in that: the transmitting device includes transmission control means activating the plurality of antennas in a predetermined sequence; and the receiving device includes reception control means activating the plurality of antennas in a predetermined sequence, so that at least one antenna is activated in each of the transmitting device and the receiving device to inspect communications condition for all combinations of the plurality of antennas.

According to the invention, communications condition can be inspected on at least one active antenna in each of the transmitting device and the receiving device. The antennas can be thus inspected for a defect based on the combinations of active antennas.

According to the present invention, the control means in each of the transmitting device and the receiving device automatically selects antennas to be activated. The inspection worker does not have to select antennas.

A data transmission method in accordance with the present invention, to address the problems described above, is characterized in that it includes the steps of: (a) receiving an external designation signal designating one of a plurality of antennas for use in data transmission; and (b) transmitting data using the antenna designated by the designation signal.

According to the method, in step (a), an external designation signal is received which designates one of the plurality of antennas for use in data transmission. Then, in step (b), data is transmitted using the antenna designated by the designation signal.

Therefore, the receiving-end device (receiving device) can verify the data transmitted using the designated antenna.

Therefore, if data reception in the receiving device is in good condition, the designated antenna is determined to be free from defects.

Another data transmission method in accordance with the present invention, to address the problems described above, is characterized in that it includes the steps of: (c) sequentially designating the plurality of antennas upon receiving a predetermined instruction; and (d) transmitting data using the sequentially designated antennas.

According to the method, upon receiving a predetermined signal, the plurality of antennas are sequentially designated in step (c). Then, in step (d), data is transmitted using the sequentially designated antennas.

Therefore, the receiving-end device can verify the data transmitted using the antennas.

Therefore, all the antennas can be inspected for a defect.

A data reception method in accordance with the present invention, to address the problems described above, is characterized in that it includes the steps of: (e) receiving an external designation signal designating one of a plurality of antennas for use in data reception; and (f) receiving data using the antenna designated by the designation signal.

According to the method, in step (e), an external designation signal is received which designates one of the plurality of antennas for use in data reception. Then, in step (f), data is received using the antenna designated by the designation signal.

Therefore, the receiving-end device (receiving device) can verify the data received using the designated antenna.

Therefore, if data reception in the receiving device is in good condition, the designated antenna is determined to be free from defects.

Another data reception method in accordance with the present invention, to address the problems described above, is characterized in that it includes the steps of: (g) sequentially designating the plurality of antennas upon receiving a predetermined instruction; and (h) receiving data using the sequentially designated antennas.

According to the method, upon receiving a predetermined signal, the plurality of antennas are sequentially selected in step (g). Then, in step (h), data is received using the sequentially designated antennas.

Therefore, the receiving-end device can verify the data transmitted using the antennas.

Therefore, all the antennas can be inspected for a defect.

A computer program in accordance with the present invention, to address the problems described above, is characterized in that it causes a computer to operate as the designation means for the transmitting device in one of the aforementioned transmitting devices.

Therefore, by loading the program into a computer system, the transmitting device is provided to the user.

Another computer program in accordance with the present invention, to address the problems described above, is characterized in that it causes a computer to operate as the designation means for the receiving device in one of the aforementioned receiving devices.

Therefore, by loading the program into a computer system, the receiving device is provided to the user.

A storage medium in accordance with the present invention, to address the problems described above, is characterized in that it is a computer-readable storage medium containing one of the aforementioned computer programs.

Therefore, by loading the program from the storage medium to a computer system, the transmitting device or the receiving device is provided to the user.

### BRIEF DESCRIPTION OF DRAWINGS

Figure 1 is a configuration illustration of an embodiment of a wireless communications system in accordance with the present invention.
Figure 2(a) is a perspective view showing the structure of an inverted-L antenna.
Figure 2(b) is a perspective view showing the structure of an inverted-F antenna.
Figure 3 is an exploded view showing an example of a video transmitter unit.
Figure 4 is an illustration of an example of how components are mounted to a display unit.
Figure 5 is a block diagram of a wireless communications system in accordance with the present invention.
Figure 6 is an illustration of a display screen produced on a display unit in inspection.

### BEST MODE FOR CARRYING OUT INVENTION

The following will describe an embodiment of the present invention in reference to accompanying figures.

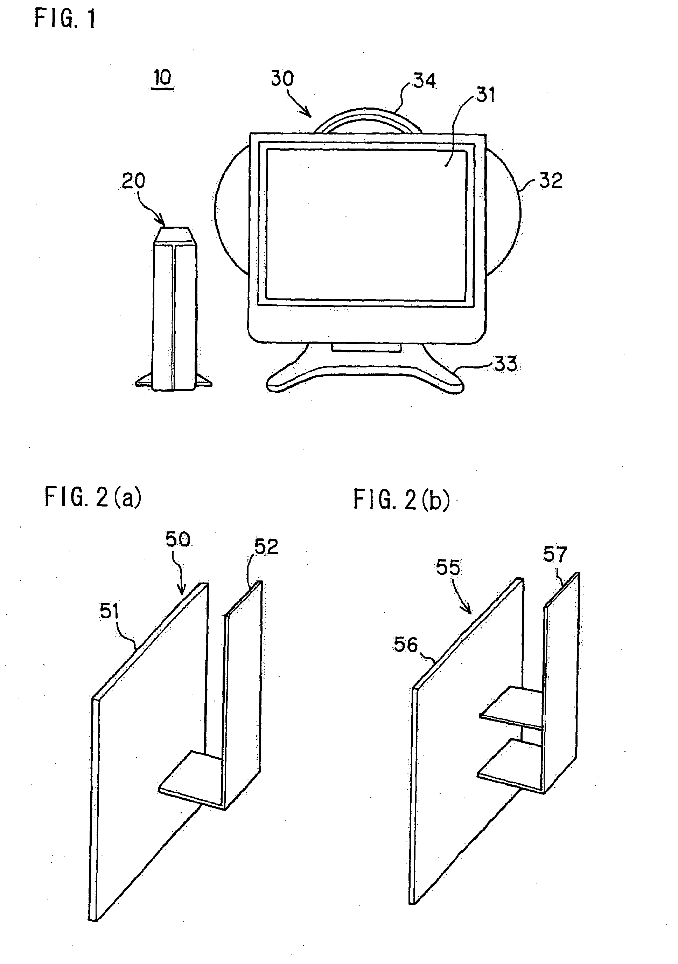

First, referring to Figure 1, a wireless communications system of the present invention is a combination of a video transmitter unit (transmitting device, communications device) 20 and a portable display unit (receiving device, communications device) 30, and a remote controller (selection means, remote control device). The video transmitter unit 20 receives video data and transmits the data by an SS wireless scheme. The display unit 30 receives the image data and produces a display from the data. The remote controller is not shown in the figures.

To receive CATV signals and television broadcast waves and send relatively large amounts of video data to the display unit 30, for example, the video transmitter unit 20 is preferably a transmission means using carrier waves in the few gigahertz or higher frequency band. The communications scheme is preferably an SS (Spread Spectrum) wireless scheme, such as direct sequence (DS) or frequency hopping (FH).

The display unit 30 primarily contains a display screen section 31, semicircular speaker housing sections 32, a stand 33, a video processing circuit (not shown), and a handle 34. The display screen section 31 is built around a liquid crystal panel. The speaker housing sections 32 are located on the left/right sides of the display screen section 31. The handle 34 is there to facilitate the transport of the whole display unit. Although the display screen section 31 is built around a liquid crystal panel, this is not limiting in any particular manner: the section 31 may be made of any member so long as a display element is made from the member. A highly portable, thin display element is especially preferred. Examples include an organic/inorganic EL display element, FED display element, and a plasma display element.

The communications device (video transmitter unit 20 and display unit 30) for a SS wireless scheme has a circuit, including a transmission means, and a plurality of antennas.

Next, antennas for each units 20, 30 will be described.

Figure 2 is a perspective view showing the structure of one of these antennas. Figure 2(a) is an inverted-L antenna. Figure 2(b) is an inverted-F antenna. The inverted-L antenna 50 is made of a rectangle antenna substrate 51 and an antenna element section 52 which is a metal plate shaped like an inverted "L" when viewed from its side. Meanwhile, the inverted-F antenna 55 is made of a rectangle antenna substrate 56 and an antenna element section 57 which is a metal plate shaped like an inverted "F" when viewed from its side. Either antenna may be used. The present embodiment assumes the use of the inverted-F antenna.

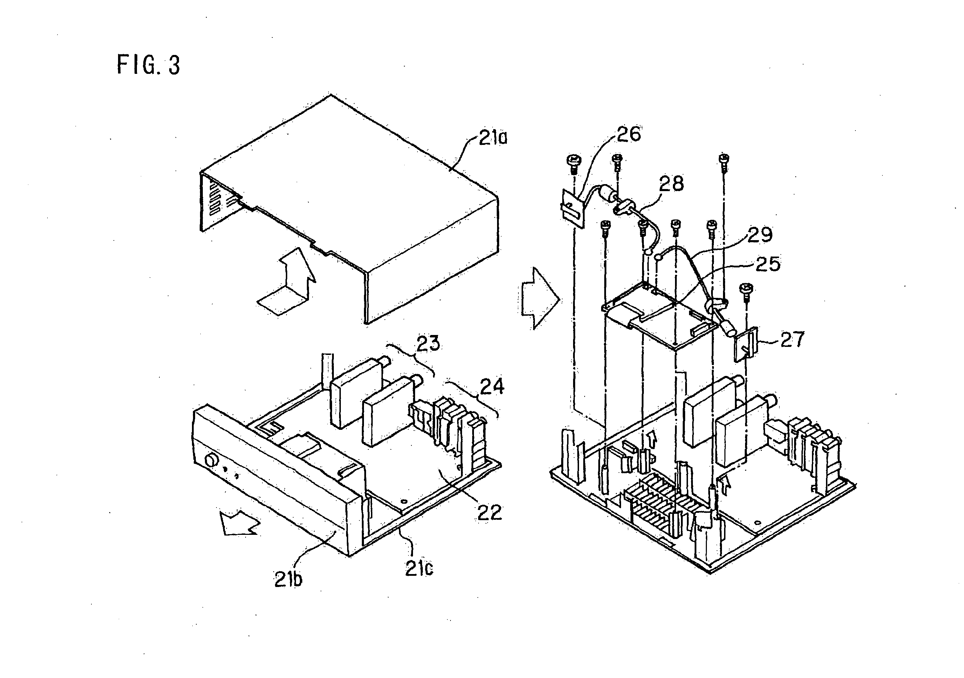

As shown in Figure 3, the video transmitter unit 20 contains a central board 22 and other components in a housing. A tuner section 23, a video terminal 24, etc. are mounted to the central board 22. The housing consists of a top cover 21a, a front panel 21b, and a bottom cover 21c. The top cover 21a and the front panel 21b are removable. Further, as shown in Figure 3, an antenna 26 and an antenna 27 are also provided inside the housing of the video transmitter unit 20. The antennas 26, 27 are fixed so that they remain positioned at right angles. The antennas 26, 27 are connected to a wireless communications transmitting section 25 via cables 28, 29 respectively. Positioned perpendicular to each other, the antennas 26, 27 have sufficient gain in each direction, as with the antenna configuration in the display unit 30 (detailed later). One can therefore exploit reception performance in accordance with the polarization planes and changes in direction of radio waves radiating from a transmitting body for wireless communications. The antennas 26, 27 are equivalents of the data transmission antennas recited in the claims.

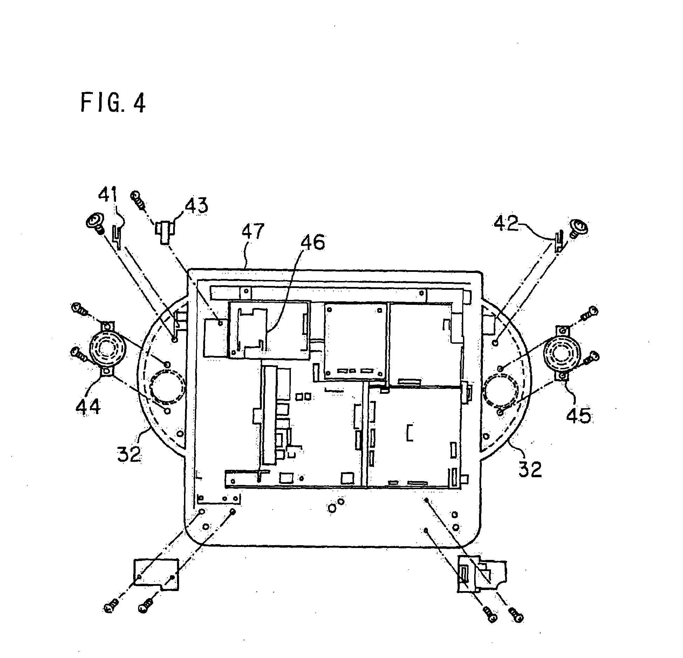

Now moving to Figure 4, antennas 41 to 43 are screwed firmly to a front cabinet 47 in the display unit 30 and connected to a wireless communications receiving section 46 via a cable. The antennas 41, 42 are attached above the speakers 44, 45 inside the speaker housing sections 32 so that they point in directions differing by 90°. The antenna 43 is located behind the display screen section 31 so that the antenna 43 point in directions differing in 90° from both the antennas 41, 42. The arrangement, where the antennas 41 to 43 are positioned orthogonal, ensures sufficient gain in each direction. One can therefore exploit reception performance in accordance with the polarization planes and changes in direction of radio waves radiating from a transmitting body for wireless communications. The antennas 41 to 43 are equivalents of the data reception antennas recited in the claims.

The antennas are positioned at right angles in each unit 20, 30. This is not however the only possibility. They can be arranged any way provided that their orientations are anisotropic. In addition, any number of antennas (more than one) may be used; the antenna count is not limited to any particular number.

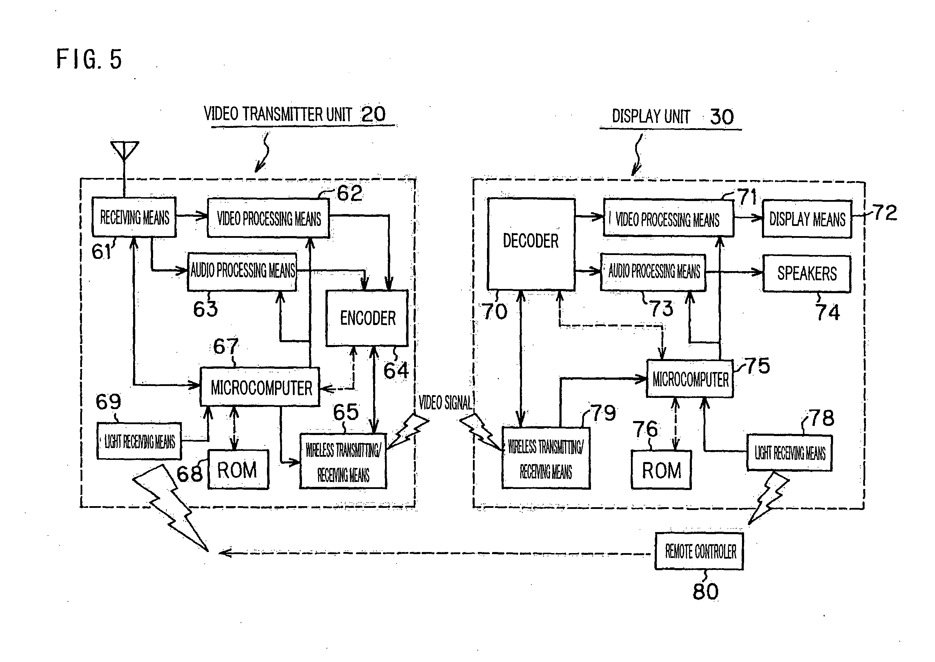

Figure 5 is a functional block diagram of a wireless communications system in accordance with the present invention.

The video transmitter unit 20 typically includes, among others, receiving means 61, video processing means 62, audio processing means 63, an encoder 64, and wireless transmitting/receiving means 65. The receiving means 61 receives a broadcast signal. The video processing means 62 processes a video signal derived from the received broadcast signal. The audio processing means 63 processes an audio signal derived from the received broadcast signal. The encoder 64 compresses the signals processed in the video processing means 62 and the audio processing means 63. The wireless transmitting/receiving means 65 transmits the signal compressed in the encoder 64 to the display unit 30. The wireless transmitting/receiving means 65 is an equivalent of the transmission means recited in the claims. The wireless transmitting/receiving means 65 is made of the wireless communications transmitting section 25, the antennas 26, 27, and the cables 28, 29.

The display unit 30 typically includes, among others, wireless transmitting/receiving means 79, a decoder 70, video processing means (display control means) 71, display means 72, audio processing means 73, speakers 74, a microcomputer 75 and ROM 76, and light receiving means 78. The wireless transmitting/receiving means 79 receives a video signal transmitted from the wireless transmitting/receiving means 65 in the video transmitter unit 20. The decoder 70 decompresses the video signal received by the wireless transmitting/receiving means 79. The video processing means (display control means) 71 processes the video signal decompressed in the decoder 70. The display means 72 displays video reproduced from the signal processed in the video processing means 71. The audio processing means 73 processes the audio signal decompressed in the decoder 70. The speakers 74 outputs audio reproduced from the signal processed in the audio processing means 73. The microcomputer 75 and ROM 76 control the display unit 30. The light receiving means 78 receives signals from a remote controller 80 through which the user manipulates the display unit 30. The wireless transmitting/receiving means 79 is the equivalent of the receiving means recited in the claims. The display screen section 31 is the equivalent of a part (screen) of the display means 72.

In the video transmitter unit 20, the following series of actions are primarily executed. The broadcast signal received by the receiving means 61 is sent to the video processing means 62 where the signal is processed, for example, to remove the video carrier wave. The obtained signal is passed through the encoder 64 to send the wireless communications signal again where the signal is processed, for example, to compress the video signal. The resultant signal is superimposed on a specified carrier frequency and transmitted from the wireless transmitting/receiving means 65 to the display unit 30. To implement these actions in a suitable manner, the video transmitter unit 20 includes a microcomputer 67 and ROM 68 which records and stores various value settings. Light receiving means 69 may be provided which receives predetermined optical signals from the remote controller 80. Thus, the light receiving means 69 serves as means which enables changes to the value settings contained in the ROM 68 through the microcomputer 67. Alternatively, the control signal from the remote controller 80 may be routed through light receiving means and a microcomputer which are also provided in the display unit 30 (indicated by 75 and 78) and then transmitted from the wireless transmitting/receiving means 79 to the microcomputer 67 by wireless communications which involves the wireless transmitting/receiving means 79. The microcomputer 67 is the equivalent of the transmission control means, designation means for a transmitting device, and designation means for a transmission antenna recited in the claims. The light receiving means 69 is the equivalent of the reception means for a transmitting device and reception means for a transmission antenna recited in the claims.

Now, the light receiving means 69, the microcomputer 67, and the wireless transmitting/receiving means 65 in the video transmitter unit 20 will be described in more detail.

The light receiving means 69 receives various signals from the remote controller 80 and passes them on to the microcomputer 67.

The microcomputer 67 receives the incoming signals from the light receiving means 69. If the received signal designates which one of the antennas 26, 27 be used for data transmission (designation signal), the microcomputer 67 sends the designation signal to the wireless transmitting/receiving means 65.

The wireless transmitting/receiving means 65 receives the designation signal from the microcomputer 67. The wireless receiving means 65 then selects the antenna designated by the designation signal. Furthermore, by using the designated antenna, the wireless transmitting/receiving means 65 sends video data to the display unit 30.

In contrast, if the microcomputer 67 have received a particular signal, the microcomputer 67 designates one antenna after another. To describe it in more detail, the microcomputer 67 sends a signal sequentially designating the antennas to the wireless transmitting/receiving means 65. The microcomputer 67 sends, for example, a signal designating the antenna 26 and a signal designating the antenna 27 in this order to the wireless transmitting/receiving means 65. The particular signal above is the equivalent of the predetermined instruction recited in the claims.

The wireless transmitting/receiving means 65 transmits data using the antennas designated sequentially. The wireless transmitting/receiving means 65, for example, transmits data using the antenna 26 before transmitting data using the antenna 27.

The wireless transmitting/receiving means 65 sends information on the antenna being used for data transmission (hereinafter, "antenna information") to the display unit 30. In other words, the wireless transmitting/receiving means 65 send information indicating which of the antennas is currently in use.

In the display unit 30, the following series of actions are primarily executed. The broadcast signal transmitted from the wireless transmitting/receiving means 65 is received by the wireless transmitting/receiving means 79 where the signal is processed, for example, to remove communications waves. The obtained signal is passed through the decoder 70 where the video signal is processed, for example. The resultant signal is passed through the video processing means 71 to the display means 72 to reproduce a display. To implement these actions in a suitable manner, the display unit 30 includes a microcomputer 75 and ROM 76 which records and stores various value settings. Light receiving means 78 may be provided which receives predetermined optical signals from the remote controller 80. Thus, the light receiving means 78 serves as means which enables changes to the value settings contained in the ROM 76 through the microcomputer 75. Hence various controls become possible. The microcomputer 75 is the equivalent of the reception control means, designation means for a receiving device, and designation means for a reception antenna recited in the claims. The light receiving means 78 is the equivalent of the reception means for a receiving device and reception means for a reception antenna recited in the claims.

Now, the light receiving means 78, the microcomputer 75, and the wireless transmitting/receiving means 79 in the display unit 30 will be described in more detail.

The light receiving means 78 receives various signals from the remote controller 80 and passes them on to the microcomputer 75.

The microcomputer 75 receives the incoming signals from the light receiving means 78. If the received signal designates which one of the antennas 41 to 43 be used for data reception (designation signal), the microcomputer 75 sends the designation signal to the wireless transmitting/receiving means 79.

The wireless transmitting/ receiving means 79 receives the designation signal from the microcomputer 75. The wireless transmitting/receiving means 79 then selects the antenna designated by the designation signal. Furthermore, by using the designated antenna, the wireless transmitting/receiving means 79 receives the video data transmitted from the video transmitter unit 20.

In contrast, if the microcomputer 75 have received a particular signal, the microcomputer 75 designates one antenna after another. To describe it in more detail, the microcomputer 75 sends a signal sequentially designating the antennas to the wireless transmitting/receiving means 79. The microcomputer 75 sends, for example, a signal designating the antenna 41, a signal designating the antenna 42, and a signal designating the antenna 43 in this order to the wireless transmitting/receiving means 65. The particular signal above is the equivalent of the predetermined instruction recited in the claims.

The wireless transmitting/ receiving means 79 receives data using the antennas sequentially designated. The wireless transmitting/receiving means 79, for example, receives data using the antenna 41, then the antenna 42, and thereafter the antenna 43.

The wireless transmitting/receiving means 79 receives antenna information from the video transmitter unit 20. The received antenna information is passed through the decoder 70 and the video processing means 71 than on to the display means 72. The display means 72 displays information indicating an antenna (identification information) according to the antenna information. The wireless transmitting/receiving means 79 preferably receives antenna information both when the wireless transmitting/receiving means 79 has received a designation signal and when the means 79 has received a particular signal.

As described in the foregoing, the video transmitter unit (transmitting device, communications device) 20 includes at least: a plurality of data transmission antennas (26, 27); the light receiving means (reception means for a transmitting device) 69 which receives an external designation signal designating an antenna for use in data transmission from the plurality of antennas; and the wireless transmitting/receiving means (transmission means) 65 transmitting data using the antenna designated by the designation signal. According to the configuration, the data transmitted using the designated antenna can be verified by a device on the receiving end (receiving device). Therefore, if the receiving device receives data normally, the designated antenna can be evaluated as being free from defects.

The video transmitter unit (transmitting device, communications device) 20 may be described as including at least: a plurality of data transmission antennas (26, 27); the microcomputer (designation means for a transmitting device) 67 sequentially designating the antennas upon receiving a predetermined instruction; and the wireless transmitting/receiving means (transmission means) 65 transmitting data using the sequentially designated antennas. According to the configuration, the data transmitted using the antennas can be verified by a receiving device. Therefore, each antenna can be evaluated as either being defective or free from defects.

As described in the foregoing, the display unit (receiving device, communications device) 30 includes: a plurality of data reception antennas (41, 42, 43); the light receiving means (reception means for a receiving device) 78 which receives an external designation signal designating an antenna for use in data reception from the plurality of antennas; and the wireless transmitting/receiving means (receiving means) 79 receiving data using the antenna designated by the designation signal. According to the configuration, the data received using the designated antenna can be verified by the receiving device. Therefore, if the receiving device receives data normally, the designated antenna can be evaluated as being free from defects.

The display unit (receiving device, communications device) 30 may be described as including at least: a plurality of data reception antennas (41, 42, 43); the microcomputer (designation means for a receiving device) 75 sequentially designating the antennas upon receiving a predetermined instruction; and the wireless transmitting/receiving means (receiving means) 79 transmitting data using the sequentially designated antennas. According to the configuration, the data transmitted using the antennas can be verified by a receiving device. Therefore, each antenna can be evaluated as either being defective or free from defects.

As mentioned earlier, the video transmitter unit 20 transmits antenna information to the display unit 30. According to the antenna information, the display unit 30 displays the identification information on the display means 72. Therefore, the user can (visually) confirm the antenna currently being used in the video transmitter unit 20.

It is preferable if information on the antenna currently being used in the display unit 30 is also displayed on the display means 72. When this is the case, the user can (visually) confirm the antenna currently being used in the display unit 30 at the same time.

In a video data transmission using one antenna after the other in the video transmitter unit 20, reception condition in the display unit 30 could possibly be so unsatisfactory for one of the antennas that the user cannot recognize antenna information.

When this is the case, the user is not able to directly determine the defective antenna; the user however can indirectly determine the defect antenna from the identification information of the other antennas.

When the remote controller 80 transmits designation information to the video transmitter unit 20, the display unit 30 may receive the designation information so that the display unit 30 can display identification information indicating the antenna being used in the video transmitter unit 20 according to the designation information (hereinafter, "another configuration").

When this is the case, however, if the video transmitter unit 20 fails to designate an antenna, the display means 72 in the display unit 30 may display identification information indicating an antenna not being used in the video transmitter unit 20. This does not occur with the configuration where the display unit 30 receives the antenna information from the video transmitter unit 20. Therefore, the information displayed on the display means 72 is more reliable in the configuration where the display unit 30 receives the antenna information from the video transmitter unit 20 than in the other configuration above.

These video transmitter unit 20 and display unit 30 are inspected before shipping. The following will describe inspection of the communications capability of antennas.

Using the remote controller 80, an inspection worker selects antennas to be inspected for a pair of a video transmitter unit 20 and a display unit 30 which sit on an inspection line. That is, the worker selects antennas to be activated. The worker selects here at least one antenna for each of the video transmitter unit 20 and the display unit 30 so that the communications capability of each antenna can be checked based on the selected antenna combination.

The selection signal from the remote controller 80 is supplied to the light receiving means 69, 78 and passed on to the microcomputers 67, 75. The selection signal from the remote controller 80 are supplied to the light receiving means 69, 78. The microcomputers 67, 75 activates a selected one of the antennas 26, 27 in the wireless transmitting/receiving means 65 and another selected one of the antennas 41, 42, 43 in the wireless transmitting/receiving means 79.

The selection signal from the remote controller 80 is supplied to the light receiving means 69. The microcomputer 67 may select and activate the antennas 26, 27 in the wireless transmitting/receiving means 65. At the same time, the microcomputer 67 may send antenna information of video transmitter unit 20 wirelessly to the microcomputer 75 via the wireless transmitting/receiving means 65, 79.

Next, the microcomputer 67 in the video transmitter unit 20 transmits inspection-use image data by SS wireless from the wireless transmitting/receiving means 65 to the wireless transmitting/receiving means 79 in the display unit 30 via the receiving means 61, the video processing means 62, and the encoder 64. The microcomputer 75 in the display unit 30 displays the image data received by the wireless transmitting/receiving means 79 on the display means 72 via the decoder 70 and the video processing means 71. The worker determines whether reception condition is good by comparing the received image displayed on the display means 72 with the standard image. In this manner, at least one antenna of each of the transmitting device and the receiving device are activated to allow the inspection of communications condition; each antenna can be inspected through the active antenna combination.

Reception condition may be evaluated by comparing with a standard signal using an inspection device or by comparing a received image with a read standard image signal using an inspection device.

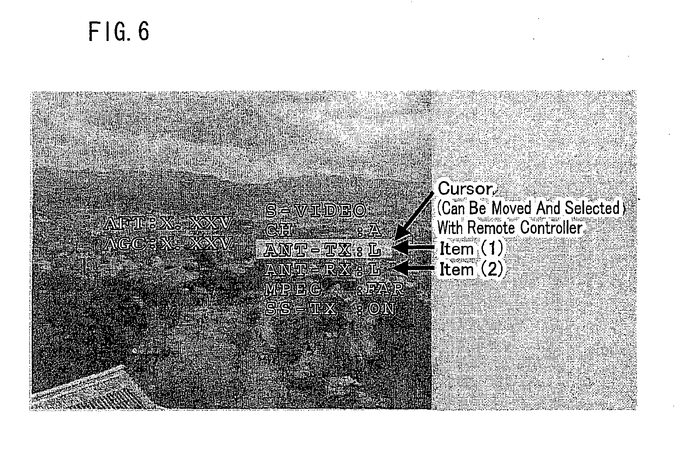

The microcomputer 75 sends an antenna selection signal to the video processing means 71. The video processing means 71 visualizes the information using symbols for display on the display means 72. Figure 6 explains such a display screen. Antenna selection information is displayed as text data. Letter symbols are set up as follows.

Item (1): "ANT-TX" indicates that antennas in the video transmitter unit 20 are selectable. An option "L" indicates that the antenna 26 is designated. Another option "R" indicates that the antenna 27 is designated. Another option "D" indicates that any one of the antennas 26, 27 is automatically selected.

Item (2): "ANT-RX" indicates that antennas in the display unit 30 are selectable. An option "L" indicates that the antenna 41 is designated. Another option "R" indicates that the antenna 42 is designated. Another option "C" indicates that the antenna 43 is designated. Another option "D" indicates that any one of the antennas 41, 42, 43 is automatically selectable.

Figure 6 shows "ANT-TX: L" and "ANT-RX: L," which means that the antennas 26, 41 are selected and activated. The antennas may be represented by icons, not letters, on the display. Different colors may used for different antennas too.

In this manner, the display means displays symbols representing antennas to be activated. This enables, in transmission/reception inspection in the inspection step, the worker to readily recognize which antennas are being inspected. Furthermore, by displaying the antenna symbols superimposed on the video signal being received, the worker can identify the currently active antennas while simultaneously checking the reception condition of the wireless communications system.

A "D" indicates that the microcomputers 67, 75 select antennas in a predetermined order in accordance with the data contained in the ROMs 68, 76. The microcomputers in the transmitting device and the receiving device automatically select the antennas to be activated; the inspection worker does not have to bother to select an antenna.

As described in the foregoing, the video processing means (display control means) 71 in the display unit 30 may be described as being configured to superimpose the identification information on the video reproduced from received video data for display on the display means.

According to the configuration, the display control means superimposes the identification information on the video reproduced from received video data for display on the display means. Therefore, the inspection worker can check the condition of the video reproduced from received video data while simultaneously confirming the antenna being used in the transmitting devices. Therefore, the worker can check reception condition while identifying the antenna being used in the transmitting devices.

Now, a concrete example of the inspection process will be described. The example will focus on the video transmitter unit 20 and the display unit individually receive the designation signal from the remote controller 80.

First, the worker uses the remote controller 80 to send a designation signal designating the antenna 26 from the remote controller 80 to the video transmitter unit 20. The worker again uses the remote controller 80 to send a designation signal designating the antenna 41 from the remote controller 80 to the display unit 30. The worker checks the display state of the image being displayed on the display means 72. In this case, the display means 72 displays "ANT-TX: L" and "ANT-RX: L."

Thereafter, the worker uses the remote controller 80 to send a designation signal designating the antenna 42 to the display unit 30. Next, the worker checks the display state of the image being displayed on the display means 72. In this case, the display means 72 displays "ANT-TX: L" and "ANT-RX: R."

Thereafter, the worker uses the remote controller 80 to send a designation signal designating the antenna 43 to the display unit 30. Next, the worker checks the display state of the image being displayed on the display means 72. In this case, the display means 72 displays "ANT-TX: L" and "ANT-RX: C."

Next, the worker uses the remote controller 80 to send a designation signal designating the antenna 27 from the remote controller 80 to the video transmitter unit 20. The worker then checks the display state of the image being displayed on the display means 72. In this case, the display means 72 displays "ANT-TX: R" and "ANT-RX: C."

Thereafter, the worker uses the remote controller 80 to send a designation signal designating the antenna 42 to the display unit 30. The worker checks the display state of the image being displayed on the display means 72. In this case, the display means 72 displays "ANT-TX: R" and "ANT-RX: R."

Thereafter, the worker uses the remote controller 80 to send a designation signal designating the antenna 41 to the display unit 30. The worker checks the display state of the image being displayed on the display means 72. In this case, the display means 72 displays "ANT-TX: R" and "ANT-RX: L."

By the foregoing operation, the worker can check reception condition in the display unit 30 for all (6) combinations of the antennas. Therefore, defective antennas can be identified from antenna combinations with which reception condition is not good.

If the antenna designation with a designation signal and the sequential switching of antennas with a particular signal are done in the inspection step before shipping of the video transmitter unit 20 and the display unit 30 as mentioned earlier, defective antennas can be identified before the units 20, 30 reach the hands of general users. In addition, after shipping, if the antenna designation and other testing are done again in inspection by the worker (user), he/she can determine defective antennas.

The display unit 30, although including the antenna 43, may be configured without the antenna 43.

Furthermore, in the foregoing, the antennas 26, 27 in the video transmitter unit 20 were described sufficiently as being anisotropically positioned. The antenna positions are by no means limited by these conditions. The antennas 26, 27 may not need to be anisotropically positioned.

The same description is applicable to the display unit 30. The antennas 41, 42, 43 may not need to be anisotropically positioned.

If at least one of the antennas in the video transmitter unit 20 is positioned anisotropic to another antenna, the condition of radio waves transmitted from the antenna positioned anisotropic to the other antenna differs from that of the radio waves transmitted from the other antenna. Therefore, good reception condition in the display unit 30 is sustained by selecting suitable antennas for use in transmission, in comparison with when all antennas are out of anisotropic positions.

The same description is applicable to the display unit 30. If at least one of the antennas is positioned anisotropic to another antenna, the condition of radio waves transmitted from the antenna positioned anisotropic to the other antenna differs from that of the radio waves transmitted from the other antenna. Therefore, good reception condition in the display unit 30 sustained by selecting suitable antennas for use in reception, in comparison with when all antennas are out of anisotropic positions.

The video transmitter unit 20 may be described as including a plurality of antennas and switching between the plurality of antennas for use in data transmission. The display unit 30 may be described as including a plurality of antennas and switching between the plurality of antennas for use in data reception.

As mentioned earlier, the microcomputer 67 sequentially designates the antennas if it receives a particular signal. When this is the case, an antenna may be designated in the video transmitter unit 20 every time a predetermined signal is received from the display unit 30.

According to the configuration, an antenna is designated every time a predetermined signal is received from the display unit 30. Therefore, if the display unit 30 transmits a predetermined signal after it is decided in the display unit 30 whether data is received normally, each antenna can be evaluated.

It may be the user that determines whether data is received normally in the display unit 30. Alternatively, the display unit 30 may be provided with a means which evaluates the data reception condition, so that the means can evaluate the condition.

As mentioned earlier, the microcomputer 75 sequentially designates the antennas if it receives a particular signal. When this is the case, an antenna may be designated in the display unit 30 every time a predetermined signal is received from the video transmitter unit 20.

According to the configuration, an antenna is designated every time a predetermined signal is received from the video transmitter unit 20. Therefore, if, for example, the video transmitter unit 20 is provided with a plurality of antennas for use in transmission and sequentially switches between the antennas, and the video transmitter unit 20 transmits a predetermined signal every time after the video transmitter unit 20 has selected all the antennas in the switching, reception condition can be evaluated in the display unit 30 for all combinations of the antennas in the video transmitter unit 20 and the display unit 30. When this is the case, one can inspect not only the antennas in the display unit 30, but also those in the video transmitter unit 20, for any defects.

It may be the user that determines whether data is received normally in the display unit 30. Alternatively, the display unit 30 may be provided with a means which evaluates the data reception condition, so that the means can evaluate the condition.

The embodiments and examples are for illustrative purposes only and by no means limit the scope of the present invention. Variations are not to be regarded as a departure from the spirit and scope of the invention, and all such modifications as would be obvious to one skilled in the art are intended to be included within the scope of the claims below.

The designation means for a transmitting device and the designation means for a receiving device are realized respectively by CPUs in the microcomputers (67, 75) or other computing means executing a computer program contained in ROMs (Read Only Memories) (for example, ROMs 68, 76), RAMs (RAMs in and/or out of the microcomputers) or other storage means to control a keyboard or other input means, a display device or other output means, or an interface circuit or other communications means. Therefore, the various functions and processing of each unit in the present embodiment are realized by merely a computer equipped with these means reading a storage medium containing the computer program and executing it. In addition, a removable storage medium containing the computer program makes it possible to execute the various functions and processing on any computer.

Such a computer program storage medium may be a memory (not shown), such as a ROM, so that the process is executable on a microcomputer. Alternatively, a program medium may be used which can be read by inserting the storage medium in an external storage device (program reader device; not shown).

In addition, in either of the cases, it is preferable if the contained program is accessible to a microprocessor which will execute the program. Further, it is preferable if the program is read, and the program is then downloaded to a program storage area of a microcomputer where the program is executed. Assume that the program for download is stored in a main body device in advance.

In addition, the program medium is a storage medium arranged so that it can be separated from the main body. Examples of such a program medium include a tape, such as a magnetic tape and a cassette tape; a magnetic disk, such as a flexible disk and a hard disk; a disc, such as a CD/MO/MD/DVD; a card, such as an IC card (inclusive of a memory card); and a semiconductor memory, such as a mask ROM, an EPROM (erasable programmable read only memory), an EEPROM (electrically erasable programmable read only memory), or a flash ROM. All these storage media hold a program in a fixed manner.

Alternatively, if a system can be constructed which can connects to the Internet or other communications network, it is preferable if the program medium is a storage medium carrying the program in a flowing manner as in the downloading of a program over the communications network.

Further, when the program is downloaded over a communications network in this manner, it is preferable if the program for download is stored in a main body device in advance or installed from another storage medium.

A transmitting device (communications device) in accordance with the present invention, as described in the foregoing, includes: a plurality of data transmission antennas; reception means, for the transmitting device, receiving an external designation signal designating one of the plurality of antennas for use in data transmission; and transmission means transmitting data using the antenna designated by the designation signal.

Another transmitting device (communications device) in accordance with the present invention is arranged, in the foregoing transmitting device, so that the reception means for the transmitting device receives the designation signal from a remote control device.

According to the arrangement, the reception means for a transmitting device receives a designation signal from a remote control device. Therefore, the designation signal can be sent from a far-away place. Therefore, the designation signal can be fed more conveniently.

Another transmitting device (communications device) in accordance with the present invention, as described in the foregoing, is arranged so as to include: a plurality of data transmission antennas; designation means for the transmitting device sequentially designating the plurality of antennas upon receiving a predetermined instruction; and transmission means transmitting data using the sequentially designated antennas.

Another transmitting device (communications device) in accordance with the present invention, is arranged, in the foregoing transmitting device, so that the antenna designation is carried out every time a predetermined signal is received from a receiving device which is a device receiving data transmitted from the transmitting device.

According to the arrangement, an antenna is designated every time a predetermined signal is received from the receiving device.

Therefore, if the receiving device transmits the predetermined signal after the receiving device has determined whether data has been received normally, all the antennas can be inspected for a defect. It may be the user that determines whether data is received normally in the receiving device. Alternatively, the receiving device may be provided with a means which evaluates the data reception condition, so that the means can evaluate the condition.

Another transmitting device (communications device) in accordance with the present invention is arranged, in the foregoing transmitting device, so that at least one of the plurality of antennas is positioned anisotropic to another one of the plurality of antennas.

According to the arrangement, at least one of the antennas is positioned anisotropic to another one. Therefore, the condition of radio waves transmitted from the antenna positioned anisotropic to the other antenna differs from that of the radio waves transmitted from the other antenna. Therefore, good reception condition in the receiving device is sustained by selecting suitable antennas for use in transmission, in comparison with when all antennas are out of anisotropic positions.

Another transmitting device (communications device) in accordance with the present invention is arranged, in the foregoing transmitting device, so that the transmission means transmits information indicating an antenna being used in the transmitting device to the receiving device.

According to the arrangement, the transmission means transmits information indicating the antenna being used in the transmitting device to the receiving device.

If the receiving device produces a display from the information indicating such an antenna, the user can (visually) confirm, on the receiving device, the antenna being used in the transmitting device.

Another receiving device (communications device) in accordance with the present invention, as described in the foregoing, is arranged so that it includes: a plurality of data reception antennas; reception means, for the receiving device, receiving an external designation signal designating one of the plurality of antennas for use in data reception; and receiving means receiving data using the antenna designated by the designation signal.

Another receiving device (communications device) in accordance with the present invention is arranged, in the foregoing receiving device, so that the reception means for the receiving device receives the designation signal from a remote control device.

According to the arrangement, the reception means for the receiving device receives a designation signal from a remote control device. Therefore, the designation signal can be sent from a far-away place. Therefore, the designation signal can be fed more conveniently.

Another receiving device (communications device) in accordance with the present invention, as described in the foregoing, is arranged so that it includes: a plurality of data reception antennas; designation means, for the receiving device, sequentially designating the plurality of antennas upon receiving a predetermined instruction; and receiving means receiving data using the sequentially designated antennas.

Another receiving device (communications device) in accordance with the present invention is arranged, in the foregoing receiving device, so that the antenna designation is carried out every time a predetermined signal is received from a transmitting device which is a device transmitting data to the receiving device.

According to the arrangement, an antenna is designated every time a predetermined signal is received from the transmitting device.

Therefore, for example, if the transmitting device is provided with a plurality of antennas for use transmission and sequentially switches between the antennas, and the transmitting device transmits a predetermined signal every time after the transmitting device has selected all the antennas in the switching, reception condition can be evaluated in the receiving device for all combinations of the antennas in the transmitting device and the receiving device. When this is the case, one can inspect not only the antennas in the receiving device, but also those in the transmitting device, for any defects.

It may be the user that determines whether data is received normally in the receiving device. Alternatively, the receiving device may be provided with a means which evaluates the data reception condition, so that the means can evaluate the condition.

Another receiving device (communications device) in accordance with the present invention is arranged, in the foregoing receiving device, so that at least one of the plurality of antennas is positioned anisotropic to another one of the plurality of antennas.

According to the arrangement, at least one of the antennas is positioned anisotropic to another antenna.

Therefore, the condition of radio waves received by the antenna positioned anisotropic to the other antenna differs from that of the radio waves received by the other antenna. Therefore, good reception condition in the receiving device is sustained by selecting suitable antennas for use in reception, in comparison with when all antennas are out of anisotropic positions.

Another receiving device (communications device) in accordance with the present invention is arranged, in the foregoing receiving device, so that the receiving means receives information indicating an antenna being used in the transmitting device from a transmitting device, the receiving device further including display means displaying identification information according to the information, received by the receiving means, which indicates the antenna, the antenna being identified using the identification information.

According to the arrangement, the receiving means receives information indicating the antenna being used in the transmitting device from the transmitting device. The display means displays identification information which identifies the antenna based on the received information indicating the antenna. Therefore, the user can (visually) confirm the antenna being used in the transmitting device.

Another receiving device (communications device) in accordance with the present invention is arranged, in the foregoing receiving device, so that the data includes at least video data, the receiving device further including display control means under control of which the display means displays the identification information superimposed on video produced from the received video data.

According to the arrangement, the display control means controls the display means to display the identification information superimposed on video produced from the received video data. Therefore, the user can check the condition of the video produced from received video data while simultaneously confirming the antenna being used in the transmitting device. Therefore, the user can check reception condition while identifying the antenna being used in the transmitting device.

A wireless communications system in accordance with the present invention, as described in the foregoing, is arranged so that it includes one of the aforementioned transmitting devices and one of the aforementioned receiving devices.

Another wireless communications system in accordance with the present invention is arranged, in the foregoing wireless communications system, so that it includes a remote control device transmitting the designation signal to the reception means for the transmitting device.

According to the arrangement, the wireless communications system includes a remote control device transmitting the designation signal to the reception means for the transmitting device. Therefore, the designation signal can be sent from a far-away place. Therefore, the designation signal can be fed more conveniently.

Another wireless communications system in accordance with the present invention is arranged, in the foregoing wireless communications system, so that it further includes a remote control device transmitting the designation signal to the reception means for the receiving device.

According to the arrangement, the wireless communications system includes a remote control device transmitting the designation signal to the reception means for the receiving device. Therefore, the designation signal can be sent from a far-away place. Therefore, the designation signal can be fed more conveniently.

Another wireless communications system in accordance with the present invention, as described in the foregoing, includes a transmitting device and a receiving device, each including a plurality of anisotropically positioned antennas, and is arranged so as to further include selection means allowing selections as to whether to individually activate the plurality of antennas in the transmitting device and the receiving device in an inspection step, wherein: the transmitting device includes transmission control means activating one of the plurality of antennas according to an instruction from the selection means; and the receiving device includes reception control means activating one of the plurality of antennas according to an instruction from the selection means, so that at least one antenna is activated in each of the transmitting device and the receiving device to inspect communications condition for all combinations of the plurality of antennas.

Another wireless communications system in accordance with the present invention, as described in the foregoing, includes a transmitting device and a receiving device, each including a plurality of anisotropically positioned antennas, and is arranged so that the transmitting device includes transmission control means activating the plurality of antennas in a predetermined sequence; and the receiving device includes reception control means activating the plurality of antennas in a predetermined sequence, so that at least one antenna is activated in each of the transmitting device and the receiving device to inspect communications condition for all combinations of the plurality of antennas.

Another wireless communications system in accordance with the present invention is arranged, in the foregoing wireless communications system, so that the receiving device includes display means displaying incoming video so as to display a symbol representing the active antenna. Another wireless communications system in accordance with the present invention is arranged, in the foregoing wireless communications system, so that the receiving device superimposes the antenna symbol onto an incoming video signal for display.

According to the invention, the display means displays symbols representing antennas to be activated. This enables, in transmitting/reception inspection in the inspection step, the worker to readily recognize which antennas are being inspected. Furthermore, by displaying the antenna symbols superimposed on the video signal being received, the worker can identify the currently active antennas while simultaneously checking the reception condition of the wireless communications system.

A data transmission method in accordance with the present invention, as described in the foregoing, includes the steps of: (a) receiving an external designation signal designating one of a plurality of antennas for use in data transmission; and (b) transmitting data using the antenna designated by the designation signal.

Another data transmission method in accordance with the present invention, as described in the foregoing, includes the steps of: (c) sequentially designating the plurality of antennas upon receiving a predetermined instruction; and (d) transmitting data using the sequentially designated antennas.

A data reception method in accordance with the present invention, as described in the foregoing, includes the steps of: (e) receiving an external designation signal designating one of a plurality of antennas for use in data reception; and (f) receiving data using the antenna designated by the designation signal.

Another data reception method in accordance with the present invention, as described in the foregoing, includes the steps of: (g) sequentially designating the plurality of antennas upon receiving a predetermined instruction; and (h) receiving data using the sequentially designated antennas.

A computer program in accordance with the present invention, as described in the foregoing, causes a computer to operate as the designation means for the transmitting device in the transmitting device.

Another computer program in accordance with the present invention, as described in the foregoing, causes a computer to operate as the designation means for the receiving device in the receiving device.

A storage medium in accordance with the present invention, as described in the foregoing, is a computer-readable storage medium containing the computer program.

### INDUSTRIAL APPLICABILITY

The invention is applicable to various communications devices which include a plurality of antennas and switch between the antennas for communications.

## Claims

1. A transmitting device, comprising:
a plurality of data transmission antennas;
reception means, for the transmitting device, receiving an external designation signal designating one of the plurality of antennas for use in data transmission; and
transmission means transmitting data using the antenna designated by the designation signal.

2. The transmitting device of claim 1, wherein the reception means for the transmitting device receives the designation signal from a remote control device.

3. A transmitting device, comprising:
a plurality of data transmission antennas;
designation means, for the transmitting device, sequentially designating the plurality of antennas upon receiving a predetermined instruction; and
transmission means transmitting data using the sequentially designated antennas.

4. The transmitting device of claim 3, wherein the antenna designation is carried out every time a predetermined signal is received from a receiving device which is a device receiving data transmitted from the transmitting device.

5. The transmitting device of any one of claims 1 to 4,
wherein at least one of the plurality of antennas is positioned anisotropic to another one of the plurality of antennas.

6. The transmitting device of any one of claims 1 to 5,
wherein the transmission means transmits information indicating an antenna being used in the transmitting device to the receiving device.

7. A receiving device, comprising:
a plurality of data reception antennas;
reception means, for the receiving device, receiving an external designation signal designating one of the plurality of antennas for use in data reception; and
receiving means receiving data using the antenna designated by the designation signal.

8. The receiving device of claim 7, wherein the reception means for the receiving device receives the designation signal from a remote control device.

9. A receiving device, comprising:
a plurality of data reception antennas;
designation means, for the receiving device, sequentially designating the plurality of antennas upon receiving a predetermined instruction; and
receiving means receiving data using the sequentially designated antennas.

10. The receiving device of claim 9, wherein the antenna designation is carried out every time a predetermined signal is received from a transmitting device which is a device transmitting data to the receiving device.

11. The receiving device of any one of claims 7 to 10, wherein at least one of the plurality of antennas is positioned anisotropic to another one of the plurality of antennas.

12. The receiving device of any one of claims 7 to 11, wherein the receiving means receives information indicating an antenna being used in the transmitting device from the transmitting device,
the receiving device further comprising display means displaying identification information according to the information, received by the receiving means, which indicates the antenna, the antenna being identified using the identification information.

13. The receiving device of any one of claims 7 to 12, wherein the data includes at least video data,
the receiving device further comprising display control means under control of which the display means displays the identification information superimposed on video produced from the received video data.

14. A communications device, comprising:
a plurality of data transmission antennas;
reception means, for a transmission antenna, receiving an external designation signal designating one of the plurality of antennas for use in data transmission; and
transmission means transmitting data using the antenna designated by the designation signal.

15. A communications device, comprising:
a plurality of data transmission antennas;
designation means, for a transmission antenna, sequentially designating the plurality of antennas upon receiving a predetermined instruction; and
transmission means transmitting data using the sequentially designated antennas.

16. A communications device, comprising:
a plurality of data reception antennas;
reception means, for a reception antenna, receiving an external designation signal designating one of the plurality of antennas for use in data reception; and
receiving means receiving data using the antenna designated by the designation signal.

17. A communications device, comprising:
a plurality of data reception antennas;
designation means, for a reception antenna, sequentially designating the plurality of antennas upon receiving a predetermined instruction; and
receiving means receiving data using the sequentially designated antennas.

18. A wireless communications system, comprising the transmitting device of any one of claims 1 to 6 and the receiving device of any one of claims 7 to 13.

19. The wireless communications system of claim 18, further comprising a remote control device transmitting the designation signal to the reception means for the transmitting device.

20. The wireless communications system of claim 18, further comprising a remote control device transmitting the designation signal to the reception means for the receiving device.

21. A wireless communications system, comprising:
a transmitting device and a receiving device, each including a plurality of anisotropically positioned antennas; and
selection means allowing selections as to whether to individually activate the plurality of antennas in the transmitting device and the receiving device in an inspection step,
wherein:
the transmitting device includes transmission control means activating one of the plurality of antennas according to an instruction from the selection means; and
the receiving device includes reception control means activating one of the plurality of antennas according to an instruction from the selection means,
so that at least one antenna is activated in each of the transmitting device and the receiving device to inspect communications condition for all combinations of the plurality of antennas.

22. A wireless communications system, comprising a transmitting device and a receiving device, each including a plurality of anisotropically positioned antennas,
wherein:
the transmitting device includes transmission control means activating the plurality of antennas in a predetermined sequence; and
the receiving device includes reception control means activating the plurality of antennas in a predetermined sequence,
so that at least one antenna is activated in each of the transmitting device and the receiving device to inspect communications condition for all combinations of the plurality of antennas.

23. The wireless communications system of either one of claims 21 and 22, wherein the receiving device includes display means displaying incoming video so as to display a symbol representing the active antenna.

24. The wireless communications system of claim 23, wherein the receiving device superimposes the antenna symbol onto an incoming video signal for display.

25. A data transmission method, comprising the steps of:
(a) receiving an external designation signal designating one of a plurality of antennas for use in data transmission; and
(b) transmitting data using the antenna designated by the designation signal.

26. A data transmission method, comprising the steps of:
(c) sequentially designating the plurality of antennas upon receiving a predetermined instruction; and
(d) transmitting data using the sequentially designated antennas.

27. A data reception method, comprising the steps of:
(e) receiving an external designation signal designating one of a plurality of antennas for use in data reception; and
(f) receiving data using the antenna designated by the designation signal.

28. A data reception method, comprising the steps of:
(g) sequentially designating the plurality of antennas upon receiving a predetermined instruction; and
(h) receiving data using the sequentially designated antennas.

29. A computer program, causing a computer to operate as the designation means for the transmitting device in the transmitting device of either one of claims 3 and 4.

30. A computer program, causing a computer to operate as the designation means for the receiving device in the receiving device of either one of claims 9 and 10.

31. A computer-readable storage medium, containing the computer program of either one of claims 29 and 30.
